**Europäisches Patentamt**

**European Patent Office**

**Office européen des brevets**

(19)

(11) Veröffentlichungsnummer: **0 062 694**
**A2**

(12) # EUROPÄISCHE PATENTANMELDUNG

(21) Anmeldenummer: **81107174.5**

(22) Anmeldetag: **11.09.81**

(51) Int. Cl.³: **G 21 C 3/16**

(30) Priorität: **15.04.81 CH 2511/81**

(43) Veröffentlichungstag der Anmeldung:
**20.10.82 Patentblatt 82/42**

(84) Benannte Vertragsstaaten:
**BE DE FR GB IT NL**

(71) Anmelder: **Gesellschaft zur Förderung der industrieorientierten Forschung an den Schweizerischen Hochschulen und weiteren Institutionen**
**Wildhainweg 21**
**CH-3012 Bern(CH)**

(72) Erfinder: **Botta, Felix**
**Traubenweg 77**
**CH-5313 Klingnau(CH)**

(74) Vertreter: **Patentanwaltsbureau Scheidegger, Zwicky & Co.**
**Stampfenbachstrasse 48 Postfach**
**CH-8023 Zürich(CH)**

(54) **Positionierungs-Einbauteil in einem nuklearen Brennstab.**

(57) Dieses Positionierungselement hat bei axialer Druckbelastung bis zu einer Schwellenlast konstante Länge und wird durch stärkere Druckbelastung irreversibel verkürzt. Zwei axial verschiebliche Belastungskörper (2, 10), insbesondere ein in einer Hülse (11) verschiebbarer Dorn (4), sind miteinander durch eine sich bei Schwellenlast lösende Verbindung zu einer Baueinheit zusammengefasst. Die unelastische Verbindung zwischen den Belastungskörpern (2, 10) kann beliebiger Art sein, wie z.B. ein dünnwandiges Rohr (16) als Knautschzone, eine bei Schwellenlast vom Dorn (4) durchstossene Membrane in der Hülse (11), Reibungsverbindung zwischen Dorn (4) und Hülse (11) oder eine Lötverbindung zwischen beiden.

Das Positionierungs-Einbauteil (1) kann aus einem Positionierungselement bestehen oder mehrere parallel und/ oder in Serie geschaltete Positionierungselemente umfassen. Die verschiedenen möglichen Verbindungen gewährleisten eine optimale Anpassung der Kraft-Weg-Kennlinie des Einbauteiles an die jeweiligen Anforderungen. Das Einbauteil ist leicht handzuhaben und verringert das Volumen des vorhandenen Gasplenums nicht unzulässig.

Fig. 1

Positionierungs-Einbauteil

in einem nuklearen Brennstab

------------------------------

Die Erfindung betrifft ein Positionierungs-Einbauteil in einem nuklearen Brennstab, dessen Hüllrohr ausserhalb einer Säule aus Tabletten- oder Partikel-Kernbrennstoff einen Brennstab-Einbau enthält, wobei der Brennstab-Einbau wenigstens ein Positionierungs-Einbauteil allein oder in Kombination mit weiteren Einbauteilen anderer Art umfasst und das Positionierungs-Einbauteil dazu dient, die Brennstoffsäule und die gegebenenfalls vorhandenen weiteren Einbauteile in dem Hüllrohr zu lokalisieren und eine axiale Ueberbelastung durch Kompensation der bei Hüllrohr, Brennstoffsäule und Brennstab-Einbau auftretenden differentiellen Längenänderungen auszuschliessen.

Bei einem herkömmlichen Tabletten-Stab, d.h. einem Brennstab, der eine Säule aus Spalt- und allenfalls Brutmaterial (hier zusammenfassend mit Brennstoff bezeichnet) in Form von Tabletten und im Gasplenum Einbauten enthält, nehmen Brennstoffsäule und Einbauten im Hüllrohr definierte Positionen ein, die sie in jeder beliebigen Brennstablage beibehalten müssen.

Es ist anzunehmen, dass bei der Fertigstellung, beim Transportieren und Handhaben der Brennstäbe etwa infolge von Stössen und Schlägen Beschleunigungskräfte auf die Brennstäbe einwirken, die eine Verschiebung der Brennstoffsäule und der Einbauten im Hüllrohr bewirken können. Solche Verschiebungen können nur in dem Masse zugelassen werden, als sie weder eine Schädigung noch eine dauernde Lageänderung der Brennstoffsäule und der Einbauten zur Folge haben. Bei gewöhnlichem Manipulieren mit Brennstäben lässt sich für die allenfalls auftretenden Beschleunigungskräfte ein oberer Grenzwert abschätzen, und es ist daher dafür Sorge zu tragen, dass Verschiebungen zumindest für Beschleunigungskräfte bis zu diesem fiktiven Grenzwert entweder überhaupt nicht stattfinden können oder ausreichend gedämpft und vollständig reversibel ablaufen, damit sich die Brennstoffsäule und die Einbauten in Ruhestellung des Brennstabes noch bzw. wieder in ihren definierten Positionen befinden.

Im Betrieb dehnen sich Hüllrohr, Brennstoffsäule und Stabeinbauten infolge der thermischen Belastung und/oder eines strahleninduzierten Schwellens der Materialien aus. Die beim Hüllrohr, bei der Brennstoffsäule und den Einbauten auftretenden Längenänderungen müssen daher mindestens so weit kompensiert werden, dass mit Sicherheit axiale Ueberbeanspruchungen derselben ausgeschlossen sind.

Bei herkömmlichen Tabletten-Stäben ist im Hüllrohr eine Schraubenfeder vorgesehen, die beim Aufsetzen des Endstopfens auf das Hüllrohr leicht vorgespannt wird und die Brennstoffsäule sowie die weiteren Einbauteile des Brennstabes in axialer Richtung belastet. Mit einer solchen Feder als Positionierungs-Einbauteil werden die vorstehenden Forderungen auf durchaus befriedigende Weise erfüllt. Der aus einer Schraubenfeder bestehende Positionierungs-Einbauteil ist auch für den Zusammenbau des Brennstabes vorteilhaft, da das Hüllrohr vom in Bestrahlungsposition des Brennstabes oberen oder vom unteren Ende her gefüllt werden kann. Ein zusätzlicher Vorteil ist, dass im allgemeinen mit der Schraubenfeder allein axiale Fabrikationstoleranzen von Hüllrohr, Brennstoffsäule und Einbauteilen ausgeglichen werden können und für die erforderliche Kompensation keinerlei zusätzliche, wenn auch einfache Bauteile nötig sind.

Bei Partikel-Stäben, d.h. Brennstäben, bei denen die Brennstoffsäule aus einer Packung von in mehreren Grössenfraktionen vorliegenden Brennstoffpartikeln besteht, liegen die Verhältnisse ungünstiger. Um eine dichte und möglichst homogene Packung zu erzielen, wird der Partikelbrennstoff in eigenen Verfahren, die meistens einen Vibrierzyklus umfassen, in das Hüllrohr eingebracht. Jede nachträgliche Störung der Partikelpackung ist wegen der damit verbundenen Entmischungsvorgänge teilweise irreversibel und führt zu einer bleibenden Dichte- und Volumenänderung, so dass insbesondere auch die beim Transport und bei der Handhabung auf die Brennstäbe einwirkenden Beschleunigungskräfte (Stösse und Schläge) keine solche Störungen der Partikelpackung herbeiführen dürfen. Eine leicht vorgespannte Feder mit einer etwa dem 2- bis 10-fachen des Gewichtes des Stabinhalts entsprechenden Vorspannkraft vermag eine durch einwirkende Beschleunigungskräfte hervorgerufene Expansion der Brennstoffsäule nur ungenügend zu verhindern, und so müssen bei Verwendung solcher Federn für den Transport und für die Handhabung von Partikel-Stäben Vorkehrungen getroffen werden, durch die stärkere Stösse und Schläge mit Sicherheit ausgeschlossen werden, was in der Praxis jedoch auf erhebliche Schwierigkeiten stösst.

In gewissen Fällen kann es auch aus verfahrenstechnischen Gründen erforderlich oder vorteilhaft sein, den Brennstab vom unteren Stabende her zu beladen. Bei Verwendung einer leicht vorgespannten Schraubenfeder als Positionierungs-Einbauteil ist ein solches Beladen der Partikel-Stäbe jedoch nicht möglich, da wegen der vor dem Brennstoff in das Hüllrohr eingebrachten leicht vorgespannten Feder das Vibrations-Verdichten des oberhalb der Feder befindlichen Brennstoffs nicht mehr kontrolliert durchführbar ist.

Für Partikel-Stäbe ist deshalb eine leicht vorgespannte Schraubenfeder als Positionierungs-Einbauteil nur wenig geeignet.

Ein naheliegender Ausweg wäre, als Positionierungs-Einbauteil eine stark vorgespannte Feder zu verwenden, bei der die mindestens dem 50-fachen Gewicht des Stabinhaltes entsprechende Vorspannkraft den sowohl beim Vibrationsverdichten wie auch beim Handhaben und Transportieren der Brennstäbe zu erwartenden Beschleunigungskräften gewachsen wäre. Je nach Brennstabgrösse müssten dann allerdings andere Federarten, wie z.B. Tellerfederpakete, anstelle der Schraubenfedern eingesetzt werden.

Solche stark vorspannbare Federn oder Federpakete sind jedoch verhältnismässig voluminös, so dass sie u.U. eine unzulässige Verkleinerung des für die freigesetzten Spaltgase zur Verfügung stehenden Gasplenums mit sich bringen, und zudem ist mit ihnen die im allgemeinen erwünschte flache Federcharakteristik nur beschränkt erreichbar.

Andererseits ist bei Verwendung von solchen stark vorgespannten Federn ein Füllen des Hüllrohres sowohl vom oberen wie auch vom unteren Ende her möglich.

Beim Füllen von unten müsste die Feder oder das Federpaket in vorgespanntem Zustand in das Hüllrohr eingebaut werden, was zusätzliche und der in der vorgespannten Feder gespeicherten Energie angemessene Massnahmen erforderlich macht.

Beim Füllen von oben kann die Feder oder das Federpaket in bereits vorgespanntem Zustand eingebaut oder erst mit dem Einbau des Endstopfens gespannt werden. Aber auch zum Spannen mit dem Endstopfen sind verhältnismässig aufwendige Spann- und Haltevorrichtungen in der Montagebox erforderlich, und auch die zum Spannen aufzubringende Energie stellt ein zusätzliches Risiko insbesondere im Hinblick auf die Integrität eines allfällig erforderlichen $\alpha$-Containments dar.

Für Partikel-Stäbe ist deshalb auch eine stark vorgespannte Feder oder ein entsprechend vorgespanntes Federpaket als Positionierungs-Einbauteil wenig geeignet.

Es war daher Aufgabe der Erfindung, ein Positionierungs-Einbauteil zu schaffen, das auch den für Partikel-Brennstäbe vorstehend genannten Anforderungen zufriedenstellend entspricht und das mit kleinem Volumen- und Materialbedarf ohne grösseren Aufwand herstellbar ist und vor allem auch einen problemlosen Einbau ohne erhöhtes Sicherheitsrisiko z.B. im Hinblick auf die Verletzlichkeit des $\alpha$-Containments gewährleistet.

Die erfindungsgemässe Lösung der Aufgabe besteht in dem im Anspruch 1 gekennzeichneten Positionierungs-Einbauteil.

Ein besonderer Vorteil des erfindungsgemässen Positionierungs-Einbauteiles ist, dass für die Realisierung der Schwellenlast und der irreversiblen Verformung bei einer die Schwellenlast übersteigenden axialen Druckbelastung alle Phänomene ausgenutzt werden können, die eine nennenswerte Elastizität und entsprechend grössere Federwege ausschliessen, also:
- Materialeigenschaften, wie inelastisches Spannungs- Dehnungsverhalten und Bruchfestigkeit bei Normal- und Schubspannungen etc.,
- Formfaktoren und ihre Einflüsse auf Spannungen und Deformationen, wie Kanten, Kerben, Schlankheitsgrad, etc.,
- Wechselwirkungen, wie Reibungen, Deformationsbegrenzungen, etc.,
- zeit-, geschwindigkeits- und temperaturabhängige Effekte, wie Kriechen, Fliessen, Erweichen, Schmelzen, etc.,
welche einzeln oder in beliebigen Kombinationen in abgestimmtem Masse zur Anwendung gelangen können, wodurch über entsprechende Kraft-Weg-Verläufe, insbesondere auch ebene und abfallende, eine weitestgehende Anpassung des Deformationsverhaltens an die jeweiligen Erfordernisse ermöglicht ist.

Vorteilhaft ist ferner auch, dass keine Vorspannkräfte erforderlich sind und keine signifikante Energiespeicherung
bei dem erfindungsgemässen Positionierungs-Einbauteil stattfindet.

Vorteilhafte Ausbildungen des Erfindungsgegenstandes
sind in den abhängigen Ansprüchen angegeben.

Im folgenden wird die Erfindung anhand von bevorzugten
Ausführungsbeispielen unter Bezugnahme auf die beiliegende
Zeichnung näher erläutert. Auf der Zeichnung zeigen:

Fig. 1 einen Längsschnitt durch ein Positionierungs-
       Einbauteil nach der Erfindung mit zwei Belastungskörpern und einem dünnwandigen Rohr
       als Knautschzone,

Fig. 2 im Längsschnitt ein der Fig. 1 ähnliches Posi-
       tionierungs-Einbauteil mit einem perforierten
       Rohr als Knautschzone,

Fig. 3 einen Längsschnitt durch ein Positionierungs-
       Einbauteil mit einer quergestellten Membrane,
       die von einem sich zur Membrane hin verjüngenden Dorn durchstossen wird,

Fig. 4 einen Längsschnitt durch ein der Fig. 3 ähnliches Positionierungs-Einbauteil, bei dem die
       Membrane von einem schlanken zylindrischen Dorn
       durchstossen wird,

Fig. 5 einen Längsschnitt durch ein Positionierungs-
       Einbauelement mit einer im wesentlichen zylindrischen Spreizfeder,

Fig. 6 einen Querschnitt des Positionierungs-Einbauteils
       längs der Linie A-A in Fig.5

Fig. 7 einen Querschnitt durch ein ähnliches Positionierungs-Einbauteil in einer etwas geänderten
       Ausführung und

Fig. 8 einen Längsschnitt durch ein Positionierungs-
       Einbauteil mit einer Schmelzsicherung.

Jedes der auf der Zeichnung dargestellten Positionierungs-Einbauteile 1 umfasst zwei im Hüllrohr 20 eines Brennstabes leicht verschiebliche Belastungskörper 2, 10, von denen der erste Belastungskörper 2 kolbenartig mit einem zylindrischen Kopfteil 3 und einem daran angesetzten axialen Dorn 4 ausgebildet ist und der zweite Belastungskörper 10 im wesentlichen die Form einer zylindrischen Hülse hat, in der der Dorn 4 des ersten Belastungskörpers 2 geführt ist. Mit zwei solchen leicht in Massenfabrikation herstellbaren Belastungskörpern 2, 10 wird ein besonders einfacher Aufbau des Positionierungs-Einbauteiles 1 erzielt, der zudem durch nur geringfügige Abänderungen variierbar ist, wodurch eine kostensparende Anpassung des Positionierungs-Einbauteiles an die jeweiligen Anforderungen gewährleistet ist.

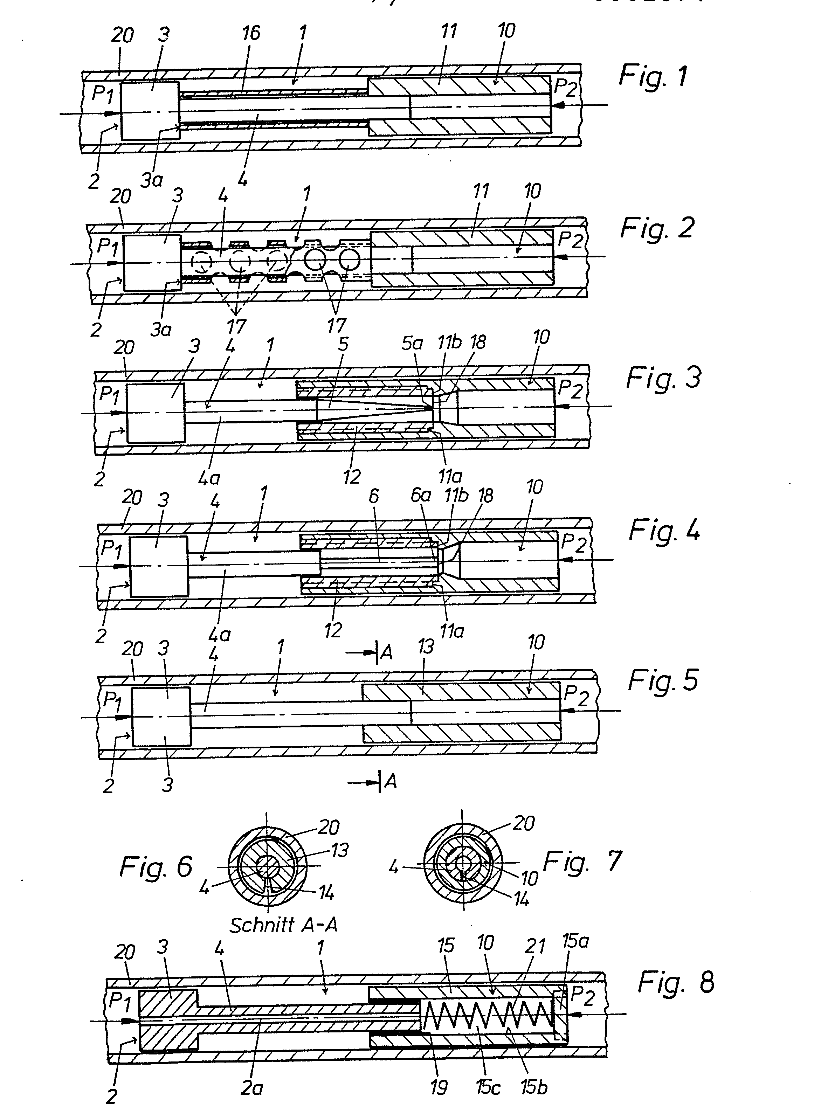

Bei dem in Fig. 1 gezeigten Positionierungs-Einbauteil 1 ist der Dorn 4 des ersten Belastungskörpers 2 als zylindrischer Stab ausgebildet und der zweite Belastungkörper 10 besteht aus einer auf den Dorn 4 leicht aufschiebbaren Hülse 11. Auf dem Dorn 4 ist ein dünnwandiges Rohr 16 angeordnet, das im unbelasteten Ruhezustand des Positionierungs-Einbauteiles 1 die beiden Belastungskörper 2 und 10 so auf axialem Abstand hält, dass das freie Ende des Dorns 4 etwas in die Hülse 11 hineinragt. Das dünnwandige Rohr 16 kann, wie in Fig.1 gezeigt, lose auf den Dorn 4 aufgeschoben sein, wobei es an seinem einen Ende an der zwischen Dorn 4 und Kopfteil 3 vorhandenen Schulter 3a des ersten Belastungskörpers 2 anliegt und die Hülse 11 mit ihrer inneren Stirnfläche 11a am anderen Ende des dünnwandigen Rohres 16 aufliegt. Die Montage des Positionierungs-Einbauteiles erfolgt dann beim Füllen des Hüllrohres 20 durch aufeinanderfolgendes Einschieben der drei Bestandteile. Das dünnwandige Rohr 16, der erste Belastungskörper 2 und der zweite Belastungskörper 10 sind jedoch zweckmässig zu einer Baueinheit zusammengefasst, die leicht zu handhaben ist und als Ganzes in das Hüllrohr 20 eingeschoben werden kann.

Bei axialer Belastung, Pfeile $P_1$, $P_2$, verformt sich das dünnwandige Rohr 16 nach dem Ueberschreiten einer kritischen Last, der Schwellenlast, zu einem balgartigen Gebilde , wobei Schwellenlast und Wellenlänge der sich bildenden Falten im wesentlichen eine Funktion des Produktes von Radius und Wandstärke des dünnwandigen Rohres sind. Diese Koppelung beeinträchtigt die Anpassungsmöglichkeiten eines solchen mit dünnwandigem Rohr ausgestatteten Positionierungs-Einbauteiles. Die zum Falten des dünnwandigen Rohres 16 aufzubringende Deformationskraft ist aber zudem noch von den beim Falten zwischen Dorn 4 und dünnwandigem Rohr 16 wirkenden Reibungskräften abhängig, deren Stärke u.a. auch vom Spiel zwischen Dorn 4 und dünnwandigem Rohr 16 abhängt, so dass die Deformationskraft noch durch Wahl eines entsprechenden Spiels zwischen Dorn 4 und dünnwandigem Rohr 16 mehr oder weniger stark beeinflussbar ist. Von Bedeutung ist schliesslich noch die Struktur des dünnwandigen Rohres 16, wie z.B. glatt mit einheitlicher Wandstärke, profiliert mit Schwach- oder Verstärkungsstellen usw. Ein diesbezügliches Beispiel ist in Fig.2 veranschaulicht.

Das in Fig.2 dargestellte Positionierungs-Einbauteil 1 ist genauso aufgebaut wie das Positionierungs-Einbauteil der Fig.1, lediglich mit dem Unterschied, dass hier das dünnwandige Rohr 16 Perforationslöcher 17 aufweist. Bei einer solchen Ausbildung des dünnwandigen Rohres 16 wird der Deformations-Modus durch Teilung, Form und Grösse der Perforationslöcher 17 mitbestimmt und daher durch Wahl verschiedener Perforations-Lochmuster in weiten Grenzen beeinflussbar.

Bei solchen ein dünnwandiges Rohr 16 als Knautschzone aufweisenden Positionierungs-Einbauteilen sind im wesentlichen Material, Radius, Wandstärke, Struktur, wie insbesondere vorgesehene Perforationslöcher, und Spiel des dünnwandigen Rohres 16 die Parameter, von denen sowohl die Schwellenlast wie auch der Verlauf der Kraft-Weg-Kennlinie des Positionierungs-Einbauteiles bei Belastung oberhalb der Schwellenlast abhängen. Positionierungs-Einbauteile mit einheitlichen ersten
und zweiten Belastungskörpern 2 bzw. 10 können daher in einem
sehr weiten Bereich allein über das dünnwandige Rohr 16 optimal an die jeweiligen Anforderungen angepasst werden. Für die
gebräuchlichsten Brennstäbe zumindest wird man mit einem nur
wenige unterschiedliche Typen umfassenden Satz von dünnwandigen Rohren 16 auskommen, so dass die Herstellung solcher
Positionierungs-Einbauteile wirtschaftlich erfolgen kann.

Bei den in Fig. 3 und 4 gezeigten Positionierungs-
Einbauteilen 1 ist eine in den hülsenförmigen zweiten Belastungskörper 10 eingespannte Membrane 18 durch den Dorn 4
des ersten Belastungskörpers 2 belastet und wird von dem
Dorn 4 durchstossen, wenn die axiale Belastung des Positionierungs-Einbauteiles die Schwellenlast überschreitet. Bei
der Ausführung nach Fig. 3 ist für die Aufnahme der Membrane
18 in der Hülse 11 durch eine Erweiterungsbohrung 11a eine
ringsumlaufende Innenschulter 11b gebildet, an die die Membrane 18 durch einen in die Erweiterungsbohrung 11a eingesetzten hülsenförmigen Einsatz 12 angepresst wird. Der Einsatz
12 ist dabei zweckmässig in die Erweiterungsbohrung 11a der
Hülse 11 eingeschraubt. Bei dem in Fig. 3 gezeigten Ausführungsbeispiel hat der Dorn 4 einen sich konisch zur Membrane 18 hin verjüngenden, schlanken Endbereich 5, dessen abgestumpftes Ende 5a an der Membrane 18 anliegt,und der hülsenförmige Einsatz 12 hat eine solche Länge und einen solchen
Innendurchmesser, dass in dieser Ruhestellung der zylindrische Schaftteil 4a des Dornes 4 etwas in den hülsenförmigen
Einsatz 12 hineinragt und darin leicht verschiebbar geführt
ist. Die Grösse der Schwellenlast ist durch die Membrane 18
und das Ende 5a des sich verjüngenden Endbereiches 5 bestimmt
und kann so in einem sehr weiten Bereich variiert werden.
Der Verlauf der Kraft-Weg-Kennlinie bei Belastung oberhalb
der Schwellenlast ist im wesentlichen durch das Zusammenwirken des Endbereiches 5 des Dornes 4 und der durchstossenen Membrane 18 bestimmt. Im Falle eines sich konisch verjüngenden Endbereiches 5 wird nach dem Durchstossen das Loch in der Membrane erweitert und die dabei auftretende Reibung sowie die für die Locherweiterung aufzubringende Verformungsarbeit sind für den Kennlinienverlauf massgebend. Der Verlauf der Kraft-Weg-Kennlinie ist somit sowohl durch die Form des Endbereiches 5, wie konische, konkave oder konvexe Mantelfläche, als auch durch die Ausbildung der Membrane, Material, Dicke, Schwachstellen, Löcher usw., beeinflussbar.

Das in Fig. 4 dargestellte Positionierungs-Einbauteil entspricht im Aufbau im wesentlichen dem Positionierungs-Einbauteil der Fig. 3, nur der Dorn 4 weist anstelle des sich konisch verjüngenden Endbereiches 5 einen abgesetzten, z.B. zylindrischen Dornabschnitt 6 auf. Wenn bei gleich ausgebildeter Membrane 18 das auf ihr aufruhende Ende 6a des Dornabschnittes 6a gleich wie das stumpfe Ende 5a des sich verjüngenden Endbereiches 5 ausgebildet ist, haben beide Positionierungs-Einbauteile (Fig. 3 und Fig.4) die gleiche Schwellenlast. Nach dem Durchstossen der Membrane 18 findet bei dem zylindrischen Dornabschnitt 6 (Fig. 4) jedoch keine weitere Locherweiterung statt und der Verlauf der Kraft-Weg-Kennlinie ist im wesentlichen durch die zwischen der Begrenzung des Membranloches und dem Dornabschnitt 6 vorhandene Reibung bestimmt.

Für eine leichte Anpassung solcher Membrane-Positionierungs-Einbauteile kann ausser der Membrane 18 auch der Dorn 4 bzw. nur der Endbereich des Dornes 4 auswechselbar gestaltet sein und ein Satz unterschiedlicher Membranen und/ oder ein Satz unterschiedlicher Dorne 4 bzw. Dornaufsätze vorgesehen werden.

Als eine weitere Ausführungsvariante zeigen die Figuren 5, 6 und 7 Positionierungs-Einbauteile, die wie eine Reibungsbremse funktionieren.

Bei dem einen Positionierungs-Einbauteil, von dem in Fig. 5 ein Längsschnitt und in Fig. 6 ein Querschnitt längs der Linie A-A dargestellt ist, ist der zweite Belastungskörper 10 als eine zylindrische, mit einem Längsschlitz 14 versehene Spreizfeder 13 ausgebildet, die den Dorn 4 des ersten Belastungskörpers 2 satt umschliesst. Bei einer ähnlichen Ausführung, von der in Fig. 7 ein Querschnitt gezeigt ist, bildet der Dorn 4 des ersten Belastungskörpers 2 die Spreizfeder und dementsprechend hat der Dorn 4 die Form einer zylindrischen Hülse mit Längsschlitz 14, während der zweite Belastungskörper 10 als ein den Dorn 4 satt umspannendes Rohr ausgebildet ist.

Bei diesen beiden Ausführungen ist die Schwellenlast durch die Haftreibung zwischen dem Dorn 4 und dem zweiten Belastungskörper 10 bestimmt, während der Verlauf der Kraft-Weg-Kennlinie bei Belastung oberhalb der Schwellenlast durch die Gleitreibung zwischen Dorn 4 und Belastungskörper 10 gegeben ist. Hieraus ergeben sich unmittelbar die Anpassungsmöglichkeiten, auf die daher nicht näher eingegangen werden braucht.

Im Betrieb treten thermische sowie strahleninduzierte Längenänderungen beim Hüllrohr, bei der Brennstoffsäule und beim Stab-Einbau des Brennstabes auf, die eine axiale Belastung des Positionierungs-Einbauteiles ergeben. Die axiale Belastung des Positionierungs-Einbauteiles kann so direkt mit der Betriebstemperatur in Beziehung gesetzt und es kann verlangt werden, dass sich das Positionierungs-Einbauteil beim Erwärmen bis auf eine zwischen Raumtemperatur und Betriebstemperatur liegende Grenztemperatur als starrer Körper und bei weiterem Erwärmen als ein in axialer Richtung zusammendrückbarer Körper darbietet. Ein nach diesen Gesichtspunkten aufgebautes Positionierungs-Einbauteil ist in Fig. 8 gezeigt.

Bei dem in Fig. 8 dargestellten Positionierungs-Einbauteil ist das in Ruhestellung in den hülsenförmigen zweiten Belastungskörper 10 eintauchende freie Ende des Dornes 4 durch eine bei einer kritischen Temperatur erweichende oder schmelzende Metallschicht 19 oder kurz ein Lot mit der Innenseite des zweiten Belastungskörpers 10 verbunden. Bei dem dargestellten Positionierungs-Einbauteil besteht der zweite Belastungskörper 10 aus einer am äusseren Ende durch einen Boden 15a abgeschlossenen Hülse 15 mit einer zylindrischen Innenwandung 15b, die für die Aufnahme des Dornes 4 des ersten Belastungskörpers 2 dimensioniert ist. Zur Entlüftung des durch den eingesetzten Dorn 4 abgeschlossenen Innenraumes 15c der Hülse 15 ist der erste Belastungskörper 2 mit einer durchgehenden axialen Bohrung 2a versehen. Damit bei geschmolzener Metallschicht 19 die beiden Belastungskörper 2, 10 nicht bereits unter der Wirkung von Schwerkraft ineinander geschoben werden, ist z.B. in der Hülse 15 eine Stützfeder 21 vorhanden, die einer solchen gravitationsbedingten Längenänderung des Positionierungs-Einbauteiles entgegenwirkt. Zum Einsetzen der Stützfeder 21 kann der Hülsenboden 15a z.B. einschraubbar ausgestaltet sein.

Im allgemeinen enthalten Brennstäbe, wie erwähnt, ausser Positionierungs-Einbauteilen noch Einbauteile anderer Art, wie etwa Reflektorelemente, Detektorelemente, Kontrollelemente usw., wobei alle Einbauteile bei jedem Brennstab in irgendeiner Reihenfolge in dem Hüllrohr untergebracht sind. Der Brennstab kann zwei oder mehrere gleiche oder unterschiedliche Positionsierungs-Einbauteile z.B. der vorstehend beschriebenen Art enthalten, die unmittelbar hintereinander oder durch je eines oder mehrere der weiteren Einbauteile anderer Art voneinander getrennt in dem Hüllrohr angeordnet sind.

Es ist ohne weiteres ersichtlich, dass z.B. aus den auf der Zeichnung dargestellten Positionierungs-Einbauteilen 1 vielgliedrige Verbund-Einbauteile zusammengestellt werden können, d.h. Positionierungs-Einbauteile, die aus mehreren solchen Positionierungselementen bestehen, erhalten werden können. So kann beispielsweise bei der in Fig. 1 gezeigten Ausführung der zylindrische Kopfteil 3 auf jeder Stirnseite mit einem Dorn 4 ausgestattet sein, wobei jeder Dorn mit einem eigenen zweiten Belastungskörper 10 zusammenwirkt. Die beiden, durch den gemeinsamen Kopfteil 3 miteinander in Reihe geschalteten Positionierungselemente können dabei gleicher oder verschiedener Ausführung sein. Ebenso kann als gemeinsames Verbindungsglied auch der zweite Belastungskörper 10 gewählt werden, wobei dann die mit ihm zusammenwirkenden Dorne gleicher oder verschiedener Ausführung sein können.

Bei Hüllrohren grösseren Durchmessers können solche Positionierungselemente auch nebeneinander in einer Parellelschaltung und zudem solche Parallelschaltungen hintereinander geschaltet werden, wobei jede beliebige Kombination gewählt werden kann. Die Ausbildungs- und Kombinationsmöglichkeiten der Positionierungselemente sind dabei so zahlreich, dass mit verhältnismässig wenig Aufwand Positionierungs-Einbauteile erhalten werden können, die allen in der Praxis bei Brennstäben vorkommenden Anforderungen optimal angepasst sind.

Mit den Positionierungs-Einbauteilen ist ein Ausgleich der axialen Fabrikationstoleranzen von Hüllrohr, Brennstoffsäule und Stabeinbauten auf direkte Weise nicht möglich. Für einen solchen Ausgleich sind zusätzliche Mittel erforderlich, wie etwa Abstandsstücke, insbesondere Scheiben, oder in der Längenerstreckung verstellbare Teile, z.B. ein mit einer Stellschraube ausgestatteter Endstopfen. Solche Ausgleichsmittel sind jedoch nicht aufwendig und vor allem beim Zusammenbau der Brennstäbe leicht handzuhaben.

Gesellschaft zur Förderung der
industrieorientierten Forschung
an den Schweizerischen Hochschulen
und weiteren Institutionen

- 1 -

P a t e n t a n s p r ü c h e

1.  Positionierungs-Einbauteil in einem nuklearen Brennstab, dessen Hüllrohr ausserhalb einer Säule aus
    Tabletten- oder Partikel-Kernbrennstoff einen Brennstab-Einbau enthält, wobei der Brennstab-Einbau wenigstens ein Positionierungs-Einbauteil allein oder in
    Kombination mit weiteren Einbauteilen anderer Art umfasst und das Positionierungs-Einbauteil dazu dient,
    die Brennstoffsäule und die gegebenenfalls vorhandenen
    weiteren Einbauteile in dem Hüllrohr zu lokalisieren
    und eine axiale Ueberbelastung durch Kompensation der
    bei  Hüllrohr, Brennstoffsäule und Brennstab-Einbau
    auftretenden differentiellen Längenänderungen auszuschliessen, gekennzeichnet durch wenigstens ein im
    Hüllrohr (20) axial belastetes Positionierungselement,
    das bei Belastung bis zu einer bestimmten Schwellenlast
    starr und bei über die Schwellenlast hinausgehender Belastung durch die aus differenziellen Längenänderungen
    von Brennstoffsäule, Hüllrohr und Brennstab-Einbau
    resultierenden axialen Druckkräfte in seiner axialen
    Ausdehnung unter Verzehr von mechanischer Energie irreversibel verkürzbar ist.

2.  Positionierungs-Einbauteil nach Anspruch 1,dadurch gekennzeichnet, dass in Serie und/oder parallel geschaltete Positionierungselemente zu einer Baueinheit zusammengefasst sind.

3. Positionierungs-Einbauteil nach Anspruch 1 oder 2, dadurch gekennzeichnet, dass jedes Positionierungselement zwei axial gegeneinander verschiebliche Belastungskörper (2, 10) umfasst, von denen der erste Belastungskörper (2) durch den zweiten Belastungskörper (10) geführt ist, und zwischen beiden Belastungskörpern (2, 10) eine bei einer der Schwellenlast entsprechenden axialen Druckbelastung nachgiebige Verbindung vorhanden ist.

4. Positionierungs-Einbauteil nach Anspruch 3, dadurch gekennzeichnet, dass bei jedem Positionierungselement ein axialer Dorn (4) des ersten Belastungskörpers (2) in einer koaxialen Hülse (11; 13; 15) des zweiten Belastungskörpers (10) geführt ist.

5. Positionierungs-Einbauteil nach Anspruch 4, dadurch gekennzeichnet, dass bei wenigstens einem Positionierungselement auf dem Dorn (4) ein dünnwandiges Rohr (16) als Knautschzone zwischen erstem und zweitem Belastungskörper (2 und 10) angeordnet ist.

6. Positionierungs-Einbauteil nach Anspruch 5, dadurch gekennzeichnet, dass bei wenigstens einem Positionierungselement das auf dem Dorn (4) angeordnete dünnwandige Rohr (16) Perforationslöcher (17) aufweist.

7. Positionierungs-Einbauteil nach Anspruch 4, gekennzeichnet durch wenigstens ein Positionierungselement, bei dem die Hülse (11) des zweiten Belastungskörpers (10) eine eingespannte Membrane (18) enthält, an der in Ruhestellung der beiden Belastungskörper (2; 10) das vordere Ende (5a) des Dorns (4) anliegt, wobei die Membrane (18) bei einem die Schwellenlast überschreitenden axialen Druck auf die beiden Belastungskörper (2; 10) von dem Dorn (4) durchstossen wird.

8. Positionierungs-Einbauteil nach Anspruch 7, dadurch gekennzeichnet, dass bei wenigstens einem Positionierungselement der der Membrane (18) nahe vordere Endbereich (5) des Dornes (4) sich zur Membrane (18) hin, insbesondere konisch verjüngt oder die Form eines geraden, insbesondere zylindrischen Stabes (6) hat.

9. Positionierungs-Einbauteil nach Anspruch 4, dadurch gekennzeichnet, dass bei wenigstens einem Positionierungselement die Hülse des zweiten Belastungskörpers (10) eine zylindrische, mit wenigstens einem Längsschlitz (14) versehene Spreizfeder (13) aufweist und der erste Belastungskörper (2) einen zylindrischen, von der Spreizfeder (13) satt umschliessbaren Dorn (4) trägt.

10. Positionierungs-Einbauteil nach Anspruch 4, dadurch gekennzeichnet, dass bei wenigstens einem Positionierungselement der Dorn (4) wenigstens in einem vorderen Bereich eine mit wenigstens einem Längsschlitz (14) versehene zylindrische Spreizfeder aufweist, die unter Reibung in einer zylindrischen Hülse (11) des zweiten Belastungskörpers (10) geführt ist.

11. Positionierungs-Einbauteil nach Anspruch 4, dadurch gekennzeichnet, dass bei wenigstens einem Positionierungselement das in Ruhestellung der beiden Belastungskörper (2, 10) in die Hülse (15) des zweiten Belastungskörpers (10) eintauchende Ende des Dornes (4) mit der Hülse (15) durch eine Lotschicht (19) verbunden ist.

12. Positionierungs-Einbauteil nach Anspruch 11, dadurch gekennzeichnet, dass zwischen dem ersten und dem zweiten Belastungskörper (2; 10) eine Stützfeder (21) vorhanden ist, die bei geschmolzener Lotschicht (19) eine gravitationsbedingte Axialverschiebung der beiden Belastungskörper gegeneinander verhindert.

0062694

Fig. 1

Fig. 2

Fig. 3

Fig. 4

Fig. 5

Fig. 6

Fig. 7

Schnitt A-A

Fig. 8